# EUROPÄISCHE PATENTSCHRIFT

(11) **EP 3 921 122 B1**
(45) Veröffentlichungstag und Bekanntmachung des Hinweises auf die Patenterteilung: **07.10.2026**
(21) Anmeldenummer: 20703214.5
(22) Anmeldetag: 03.02.2020
(51) Int. Cl.: B25J 9/16

(54) **AUSRICHTEN ZWEIER ROBOTERARME ZUEINANDER**
ALIGNING TWO ROBOT ARMS RELATIVE TO ONE ANOTHER
ALIGNEMENT DE DEUX BRAS DE ROBOT L'UN PAR RAPPORT À L'AUTRE

(30) Priorität: 05.02.2019 DE 102019102803
(43) Veröffentlichungstag der Anmeldung: 15.12.2021
(73) Patentinhaber: FR Administration GmbH, 81369 München (DE)
(72) Erfinder: WAHRMANN LOCKHART, Daniel, 80469 München (DE); SPENNINGER, Andreas, 85757 Karlsfeld (DE); SABAGHIAN, Mohamadreza, 81479 München (DE); JÄHNE, Christoph, 80686 München (DE); QU, Zheng, 86163 Augsburg (DE); GOLL, Thore, 80687 München (DE); WAFIK, Ahmed, 80798 München (DE); LOINGER, Benjamin, 81379 München (DE); KUGLER, Christoph, 80339 München (DE); CALAFELL GARCIA, Carles, 81539 München (DE)
(74) Vertreter: Cohausz & Florack
(86) Internationale Anmeldenummer: PCT/EP2020/052538
(87) Internationale Veröffentlichungsnummer: WO 2020/161039

(56) Entgegenhaltungen:
- EP-A2- 1 498 792
- US-A1- 2018 036 882
- LONG TAO ET AL: "Optimization on multi-robot workcell layout in vertical plane", INFORMATION AND AUTOMATION (ICIA), 2011 IEEE INTERNATIONAL CONFERENCE ON, IEEE, 6 June 2011 (2011-06-06), pages 744 - 749, XP032003290, ISBN: 978-1-4577-0268-6, DOI: 10.1109/ICINFA.2011.5949092

## Beschreibung

Die Erfindung betrifft ein Verfahren zum Vorgeben einer relativen Position zwischen einer ersten Basis eines ersten Robotermanipulators und einer zweiten Basis eines zweiten Robotermanipulators

Im Stand der Technik sind diverse Simulationen im Bereich der Robotik und der Entwicklung bekannt.

Die EP 1 498 792 A2 betrifft hierzu eine Offline-Simulationsvorrichtung für einen Roboter, die eine Operation eines Roboters simuliert, der mit einem Werkstück und einer Peripherievorrichtung in einem dreidimensionalen Raum angeordnet ist, indem gleichzeitig dreidimensionale Modelle des Roboters, des Werkstücks und der Peripherievorrichtung auf einem Bildschirm angezeigt werden, umfassend: Ein Mittel zum Bestimmen von Anordnungspositionen einer Basis des Roboters, sodass der Roboter an jeder der Anordnungspositionen eine voreingestellten Folge von Aufgabenpunkten zum Ausführen von Aufgaben am Werkstück erreicht; ein Mittel zum Gewinnen eines Index, der einen Operations-Sicherheitsabstand des Roboters an jedem Aufgabenpunkt darstellt, wenn der Roboter an jedem der erreichbaren Punkte angeordnet wird; und ein Mittel, das die Anordnungspositionen und die gewonnenen Indizes für die jeweiligen Anordnungspositionen auf dem Bildschirm darstellt.

Der Artikel "Optimization on Multi-Robot Workcell Layout in vertical plane" von den Autoren Long Tao et al. der Konferrenz "INFORMATION AND AUTOMATION" (ICIA), von 2011, einer IEEE International Conference, 06. Juni 2011, Shenzhen, China (Seiten 744-749, XP032003290) beschreibt außerdem ein Verfahren zur Auslegung und zur Positionierung von Mulit-Roboter Arbeitszellen, die zur Fertigung von Werkstücken mit großer Fläche im dreidimensionalen Raum verwendet werden.

Insbesondere dann, wenn eine Last, die für einen einzelnen Robotermanipulator zu schwer ist oder auch zu sperrig ist, durch einen einzigen stationären Robotermanipulator bewegt werden soll, so bietet es sich an, dafür zwei einzelne Robotermanipulatoren miteinander zu verschalten, um die Last gemeinsam zu bewegen. Auch andere Aufgaben werden vorteilhaft von mehreren einzelnen Robotermanipulatoren oder von einem Robotersystem mit zwei Robotermanipulatorarmen kooperativ gelöst. In beiden Fällen stellt sich die Frage nach der initialen Positionierung, das heißt im Falle von einzelnen Robotermanipulatoren, wie eine Basis des ersten Robotermanipulators gegenüber dem zweiten Robotermanipulator optimal zu platzieren ist, bzw. im Falle eines einzigen Robotersystems mit zwei Robotermanipulatorarmen, wie die jeweiligen Basen der Robotermanipulatorarme zueinander optimal zu platzieren sind. Durch die gleich gelagerten Problemstellungen in beiden Fällen werden im folgenden auch im Falle eines Robotersystems mit zwei Robotermanipulatorarmen ein jeweiliger Robotermanipulatorarm als ein jeweiliger Robotermanipulator bezeichnet. Der Begriff des Robotermanipulators bezeichnet daher insbesondere einen Robotermanipulatorarm, ganz gleich ob jeder Robotermanipulator einzeln betreibbar ist und seine eigene Steuereinheit aufweist, oder ob beide Robotermanipulatoren von einer einzigen Steuereinheit angesteuert werden und auf einer gemeinsamen Plattform angeordnet sind.

Aufgabe der Erfindung ist es, das stationäre Ausrichten eines ersten Robotermanipulators gegenüber einem zweiten Robotermanipulator technisch zu unterstützen.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Vorgeben einer relativen Position zwischen einer ersten Basis eines ersten Robotermanipulators und einer zweiten Basis eines zweiten Robotermanipulators, wobei ein erster Arbeitsraum des ersten Robotermanipulators ermittelt wird, wobei der erste Arbeitsraum eine endliche Vielzahl von Tupeln aus möglichen Positionen des ersten Endeffektors und möglichen Orientierungen des ersten Endeffektors an den jeweiligen Positionen des ersten Endeffektors angibt, wobei für jede aus einer vorgegebenen Vielzahl von möglichen relativen Positionen zwischen der ersten Basis und der zweiten Basis eine Anzahl von denjenigen Tupeln aus dem ersten Arbeitsraum als Bewertungsgröße ermittelt wird, für die ein zweiter Endeffektor des zweiten Robotermanipulators in einer vordefinierten Orientierung und/oder in einem vordefinierten Abstand jeweils relativ zum ersten Endeffektor positionierbar ist, und wobei diejenige relative Position zwischen der ersten Basis und der zweiten Basis mit der höchsten Bewertungsgröße ermittelt und ausgegeben wird, wobei der erste Robotermanipulator gegenüber dem zweiten Robotermanipulator gemäß der ermittelten und ausgegebenen relativen Position zwischen der ersten Basis und der zweiten Basis stationär ausgerichtet wird.

Das Verfahren ist insbesondere ein computerimplementiertes Verfahren.

Ein Tupel beschreibt eindeutig ein Paar aus Position und Orientierung des ersten Endeffektors. Ein und dieselbe Orientierung des ersten Endeffektors an zwei verschiedenen Positionen führt daher zu zwei Tupeln. Indem eine endliche Anzahl von Tupeln ermittelt wird, ergibt sich ein erster Arbeitsraum als eine endliche Liste von Tupeln, wobei jeder Listeneintrag, das heißt ein bestimmtes der Tupel, eine bestimmte und eindeutige Kombination von Position und Orientierung des ersten Endeffektors beschreibt.

Sowohl der erste Robotermanipulator als auch der zweite Robotermanipulator weisen bevorzugt jeweils eine Vielzahl von Gliedern auf, wobei die Glieder durch Gelenke miteinander verbunden sind, sodass die Glieder jeweils paarweise um ein Gelenk verdrehbar oder verschiebbar oder verkippbar sind. Bevorzugt sind die jeweiligen Gelenke mit Aktuatoren verbunden, die durch Ansteuerung das Verdrehen oder das Verkippen oder das Verschieben der Glieder gegeneinander erlauben.

Die jeweilige Basis des jeweiligen Robotermanipulators bezeichnet insbesondere das am weitesten proximal gelegene Glied eines Robotermanipulators. Insbesondere ist die Basis gegenüber einer Aufstellfläche des jeweiligen Robotermanipulators, wie einem Boden oder einer Tischplatte oder einem Fahrwagen, unbeweglich.

Das Ermitteln der Vielzahl möglicher Positionen des ersten Endeffektors erfolgt dabei bevorzugt durch eine Simulation über den gesamten erreichbaren geometrischen Bereich des ersten Endeffektors. Bevorzugt werden in diskreten Abständen die möglichen Positionen gespeichert, sodass insbesondere ein Raster mit möglichen Positionen des ersten Endeffektors entsteht. Begrenzt werden die möglichen Positionen des ersten Endeffektors dabei insbesondere durch den geometrisch erreichbaren Raum des ersten Endeffektors.

Bevorzugt werden insbesondere alle diejenigen Tupel von Position und Orientierung des ersten Endeffektors betrachtet, für die der zweite Endeffektor des zweiten Robotermanipulators in einer vorgegebenen Orientierung und/oder in einem vorgegebenen Abstand relativ zum ersten Endeffektor positionierbar und ausrichtbar ist. Das heißt, dass Positionen und Orientierungen des ersten Endeffektors im ersten Arbeitsraum des ersten Robotermanipulators gesucht werden, bei denen auch der zweite Endeffektor des zweiten Robotermanipulators in einem vorgegebenen Abstand und/oder in einer vorgegebenen Orientierung jeweils relativ zum ersten Endeffektor durch die geometrischen Einschränkungen der jeweiligen Glieder des jeweiligen Robotermanipulators positionierbar und ausrichtbar ist. So wird vorteilhaft sichergestellt, dass eine Last in den interessierenden Posen des ersten Robotermanipulators von dem ersten Endeffektor und von dem zweiten Endeffektor zur gleichen Zeit berührt werden kann. Ist dies der Fall, so wird das entsprechende Tupel in die Bewertungsgröße mit eingerechnet.

Die Bewertungsgröße ist daher ein Maß dafür, in welchem gemeinsamen Arbeitsraum der erste Endeffektor und der zweite Endeffektor kooperativ eine Aufgabe ausfüllen können. Je größer dieses Maß ist, umso größer ist der gemeinsame Arbeitsraum, und umso vielfältigere Aufgaben können vom ersten Robotermanipulator kooperativ mit dem zweiten Robotermanipulator durchgeführt werden.

Es ist eine vorteilhafte Wirkung der Erfindung, dass eine relative Position zwischen zwei Basen von zwei Robotermanipulatoren insoweit optimal berechnet wird, dass eine größtmögliche Zahl von kooperativen Stellungen der Endeffektoren der Robotermanipulatoren zueinander ermittelt wird.

Gemäß einer vorteilhaften Ausführungsform dient das Verfahren zum Vorgeben einer relativen Position und einer relativen Orientierung zwischen der ersten Basis des ersten Robotermanipulators und der zweiten Basis des zweiten Robotermanipulators, wobei für jede aus einer vorgegebenen Vielzahl von möglichen relativen Positionen und möglichen relativen Orientierungen zwischen der ersten Basis und der zweiten Basis die Bewertungsgröße ermittelt wird, wobei diejenige relative Position und diejenige relative Orientierung zwischen der ersten Basis und der zweiten Basis mit der höchsten Bewertungsgröße ermittelt und ausgegeben wird. Die relative Orientierung zwischen der ersten Basis und der zweiten Basis wird bevorzugt durch einen Satz differentieller Lagewinkel beschrieben.

Gemäß einer weiteren vorteilhaften Ausführungsform wird beim Ermitteln der Bewertungsgröße geprüft, ob eine Kollision zwischen dem ersten Robotermanipulator und dem zweiten Robotermanipulator auftritt.

Wird insbesondere festgestellt, dass eine Kollision vorliegen würde, so wird dieses entsprechende Tupel nicht in die Bewertungsgröße mit eingerechnet. Bevorzugt erfolgt das Prüfen, ob eine Kollision zwischen dem ersten Robotermanipulator und dem zweiten Robotermanipulator auftritt, durch Modellieren von geometrischen Körpern und dem gedachten Anordnen der geometrischen Körper an Gliedern des ersten Robotermanipulators und an Gliedern des zweiten Robotermanipulators und durch Prüfen auf eine mögliche geometrische Überlappung der jeweiligen geometrischen Körper. Durch das Modellieren von geometrischen Körpern kann vorteilhaft zusätzlich zur Kollisionsüberprüfung ein Sicherheitsabstand mit einberechnet werden, den der erste Robotermanipulator zum zweiten Robotermanipulator nicht unterschreiten soll und umgekehrt. Ferner bietet diese Art auf Kollisionsprüfung einen effizienten Weg hinsichtlich Rechenzeit und Rechenaufwand.

Gemäß einer weiteren vorteilhaften Ausführungsform werden die möglichen relativen Orientierungen und/oder möglichen relativen Positionen zwischen der ersten Basis und der zweiten Basis aus der vorgegebenen Vielzahl in einem Raster, bevorzugt in einem äquidistanten Raster, vorgegeben.

Gemäß einer weiteren vorteilhaften Ausführungsform werden die möglichen relativen Orientierungen und/oder möglichen relativen Positionen zwischen der ersten Basis und der zweiten Basis aus der vorgegebenen Vielzahl durch eine restringierte nichtlineare Optimierung vorgegeben.

Bevorzugt umfasst die restringierte nichtlineare Optimierung eine Sequenz quadratischer Optimierung. Die Sequenz quadratischer Optimierung stellt insbesondere eine Erweiterung zu einem gradientenbasierten Optimierungsverfahren dar, indem zusätzlich zu den lokalen Ableitungen einer Zielfunktion auch Krümmungen der Zielfunktion zumindest lokal berücksichtigt werden. Gemäß einer weiteren vorteilhaften Ausführungsform umfasst die restringierte nichtlineare Optimierung einen Evolutionsalgorithmus.

Gemäß einer weiteren vorteilhaften Ausführungsform ist eine Restriktion der nichtlinearen Optimierung eine Schnittmenge aus den geometrischen maximal erreichbaren Räumen des ersten Endeffektors und des zweiten Endeffektors.

Gemäß einer weiteren vorteilhaften Ausführungsform wird ein zweiter Arbeitsraum des zweiten Robotermanipulators ermittelt, wobei der zweite Arbeitsraum eine endliche Vielzahl von Tupeln aus möglichen Positionen des zweiten Endeffektors und möglichen Orientierungen des zweiten Endeffektors an den jeweiligen Positionen des zweiten Endeffektors angibt, wobei eine Restriktion der nichtlinearen Optimierung auf Basis einer Schnittmenge aus dem ersten Arbeitsraum des ersten Robotermanipulators und des zweiten Arbeitsraums des zweiten Robotermanipulators gebildet wird.

Gemäß einer weiteren vorteilhaften Ausführungsform ist die vordefinierte Orientierung des zweiten Endeffektors relativ zum ersten Endeffektor durch eine halbe Drehung um einen Referenzpunkt des ersten Endeffektors definiert, sodass der erste Endeffektor und der zweite Endeffektor symmetrisch aufeinander zeigen. Die halbe Drehung stellt insbesondere eine Drehung um 180° um eine vertikale Achse dar.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: ein Verfahren zum Vorgeben einer relativen Position und einer relativen Orientierung zwischen einer ersten Basis eines ersten Robotermanipulators und einer zweiten Basis eines zweiten Robotermanipulators gemäß einem Ausführungsbeispiel der Erfindung,
- Fig. 2: ein System zum Vorgeben einer relativen Position und einer relativen Orientierung zwischen einer ersten Basis eines ersten Robotermanipulators und einer zweiten Basis eines zweiten Robotermanipulators ,
- Fig. 3: eine vorgegebene relative Orientierung und einen vorgegeben Abstand des zweiten Endeffektors relativ zum ersten Endeffektor gemäß dem in Fig. 1 erläuterten Ausführungsbeispiel der Erfindung
- Fig. 4: eine relative Position und eine relative Orientierung der ersten Basis zur zweiten Basis für die in Fig. 3 dargestellte relative Orientierung und den Abstand des zweiten Endeffektors relativ zum ersten Endeffektor, und
- Fig. 5: einen ersten Robotermanipulator und einen zweiten Robotermanipulator als Alternative zu dem in Fig. 2 dargestellten System.

Die Darstellungen in den Figuren sind schematisch und nicht maßstäblich.

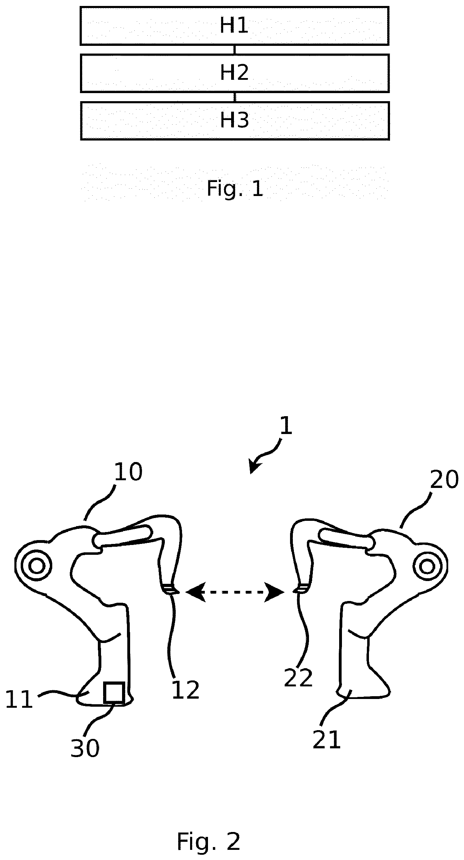

Fig. 1 zeigt ein Verfahren zum Vorgeben einer relativen Position und einer relativen Orientierung zwischen einer ersten Basis 11 eines ersten Robotermanipulators 10 und einer zweiten Basis 21 eines zweiten Robotermanipulators 20, wobei ein erster Arbeitsraum des ersten Robotermanipulators 10 ermittelt H1 wird, wobei der erste Arbeitsraum eine endliche Vielzahl von Tupeln aus möglichen Positionen des ersten Endeffektors 12 und möglichen Orientierungen des ersten Endeffektors 12 an den jeweiligen Positionen des ersten Endeffektors 12 angibt, wobei für jede aus einer vorgegebenen Vielzahl von möglichen relativen Positionen und möglichen relativen Orientierungen zwischen der ersten Basis 11 und der zweiten Basis 21 eine Anzahl von denjenigen Tupeln aus dem ersten Arbeitsraum als Bewertungsgröße ermittelt H2 wird, für die ein zweiter Endeffektor 22 des zweiten Robotermanipulators 20 in einer vordefinierten Orientierung und/oder in einem vordefinierten Abstand jeweils relativ zum ersten Endeffektor 12 positionierbar ist, und wobei diejenige relative Position und diejenige relative Orientierung zwischen der ersten Basis 11 und der zweiten Basis 21 mit der höchsten Bewertungsgröße ermittelt und ausgegeben H3 wird.

Fig. 2 zeigt eine Simulationsrecheneinheit 30 zum Vorgeben einer relativen Position und einer relativen Orientierung zwischen einer ersten Basis 11 eines ersten Robotermanipulators 10 und einer zweiten Basis 21 eines zweiten Robotermanipulators 20, wobei die Simulationsrecheneinheit 30 eine Steuereinheit des ersten Robotermanipulators 10 ist. Die Simulationsrecheneinheit 30 ist dazu eingerichtet und ausgeführt, einen ersten Arbeitsraum des ersten Robotermanipulators 10 zu ermitteln, wobei der erste Arbeitsraum eine endliche Vielzahl von Tupeln aus möglichen Positionen des ersten Endeffektors 12 und möglichen Orientierungen des ersten Endeffektors 12 an den jeweiligen Positionen des ersten Endeffektors 12 angibt, wobei die Simulationsrecheneinheit 30 weiter dazu eingerichtet und ausgeführt ist, für jede aus einer vorgegebenen Vielzahl von möglichen relativen Positionen und möglichen relativen Orientierungen zwischen der ersten Basis 11 und der zweiten Basis 21 eine Anzahl von denjenigen Tupeln aus dem ersten Arbeitsraum als Bewertungsgröße zu ermitteln, für die ein zweiter Endeffektor 22 des zweiten Robotermanipulators 20 in einer vordefinierten Orientierung und/oder in einem vordefinierten Abstand jeweils relativ zum ersten Endeffektor 12 positionierbar ist, und wobei die Simulationsrecheneinheit 30 dazu eingerichtet und ausgeführt ist, diejenige relative Position und diejenige relative Orientierung zwischen der ersten Basis 11 und der zweiten Basis 21 mit der höchsten Bewertungsgröße zu ermitteln und auszugeben.

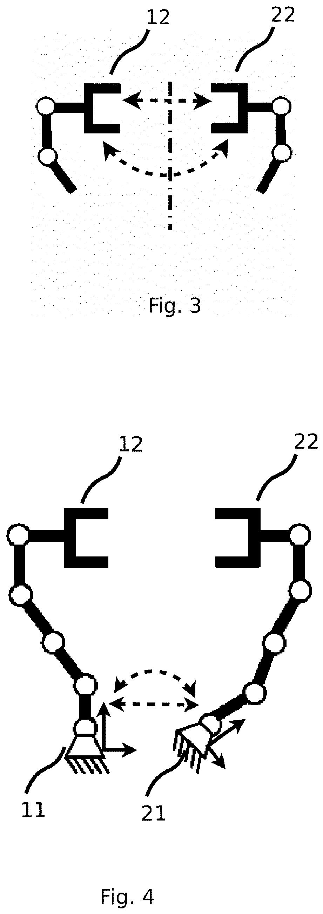

Fig. 3 zeigt die vorgegebene Orientierung des zweiten Endeffektors 22 relativ zum ersten Endeffektor 12, die durch eine halbe Drehung um einen Referenzpunkt des ersten Endeffektors 12 definiert ist, sodass der erste Endeffektor 12 und der zweite Endeffektor 22 symmetrisch aufeinander zeigen.

Fig. 4 zeigt eine jeweilige mögliche Pose des ersten Robotermanipulators 10 und des zweiten Robotermanipulators 20, für eine bestimmte aus der Vielzahl möglicher Tupel des ersten Endeffektors 12, für die der zweite Endeffektor 22 des zweiten Robotermanipulators 20 in der vorgegebenen Orientierung und in dem vorgegebenen Abstand jeweils relativ zum ersten Endeffektor 12 positionierbar ist, wie in Fig. 3 dargestellt. Ferner sind in Fig. 4 die relative Orientierung und der relative Abstand der ersten Basis 11 zur zweiten Basis 21 dargestellt.

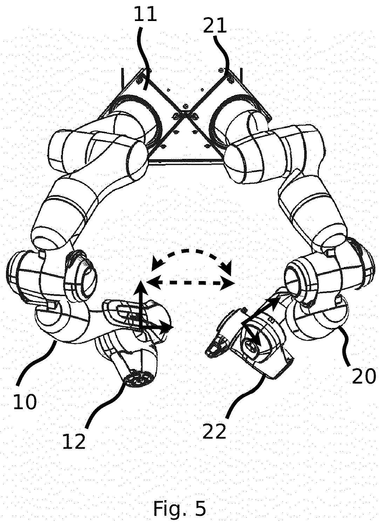

Fig. 5 zeigt einen Aufbau aus einem auf einem gemeinsamen Sockel angeordneten ersten Robotermanipulator 10 und zweiten Robotermanipulator 20, wobei beide Robotermanipulatoren 10,20 in Draufsicht dargestellt sind. Auch für einen solchen Aufbau sind die Beschreibungen der Fig. 1 bis 4 anwendbar, insbesondere dann, wenn der erste Robotermanipulator 10 und der zweite Robotermanipulator 20 in ihrem Abstand zueinander oder in ihrer relativen Orientierung am Sockel variabel und verstellbar angeordnet sind.

### Bezugszeichenliste

- 10: erster Robotermanipulator
- 11: erste Basis
- 12: erster Endeffektor
- 20: zweiter Robotermanipulator
- 21: zweite Basis
- 22: zweiter Endeffektor
- 30: Simulationsrecheneinheit

- H1: Ermitteln
- H2: Ermitteln
- H3: Ermitteln und Ausgeben

## Patentansprüche

1. Verfahren zum Vorgeben einer relativen Position zwischen einer ersten Basis (11) eines ersten Robotermanipulators (10) und einer zweiten Basis (21) eines zweiten Robotermanipulators (20),
wobei ein erster Arbeitsraum des ersten Robotermanipulators (10) ermittelt (H1) wird, wobei der erste Arbeitsraum eine endliche Vielzahl von Tupeln aus möglichen Positionen des ersten Endeffektors (12) und möglichen Orientierungen des ersten Endeffektors (12) an den jeweiligen Positionen des ersten Endeffektors (12) angibt, wobei für jede aus einer vorgegebenen Vielzahl von möglichen relativen Positionen zwischen der ersten Basis (11) und der zweiten Basis (21) eine Anzahl von denjenigen Tupeln aus dem ersten Arbeitsraum als Bewertungsgröße ermittelt (H2) wird, für die ein zweiter Endeffektor (22) des zweiten Robotermanipulators (20) in einer vordefinierten Orientierung und/oder in einem vordefinierten Abstand jeweils relativ zum ersten Endeffektor (12) positionierbar ist, und
wobei diejenige relative Position zwischen der ersten Basis (11) und der zweiten Basis (21) mit der höchsten Bewertungsgröße ermittelt und ausgegeben (H3) wird, wobei der erste Robotermanipulator (10) gegenüber dem zweiten
Robotermanipulator (20) gemäß der ermittelten und ausgegebenen relativen Position zwischen der ersten Basis (11) und der zweiten Basis (21) stationär ausgerichtet wird.

2. Verfahren nach Anspruch 1, wobei das Simulationsverfahren zum Vorgeben einer relativen Position und einer relativen Orientierung zwischen der ersten Basis (11) des ersten Robotermanipulators (10) und der zweiten Basis (21) des zweiten Robotermanipulators (20) dient,
wobei für jede aus einer vorgegebenen Vielzahl von möglichen relativen Positionen und möglichen relativen Orientierungen zwischen der ersten Basis (11) und der zweiten Basis (21) die Bewertungsgröße ermittelt wird,
wobei diejenige relative Position und relative Orientierung zwischen der ersten Basis (11) und der zweiten Basis (21) mit der höchsten Bewertungsgröße ermittelt und ausgegeben wird.

3. Verfahren nach einem der vorhergehenden Ansprüche, wobei beim Ermitteln der Bewertungsgröße geprüft wird, ob eine Kollision zwischen dem ersten Robotermanipulator (10) und dem zweiten Robotermanipulator (20) auftritt.

4. Verfahren nach einem der Ansprüche 1 bis 3, wobei die möglichen relativen Orientierungen und/oder möglichen relativen Positionen zwischen der ersten Basis (11) und der zweiten Basis (21) aus der vorgegebenen Vielzahl in einem Raster vorgegeben werden.

5. Verfahren nach einem der Ansprüche 1 bis 3, wobei die möglichen relativen Orientierungen und/oder möglichen relativen Positionen zwischen der ersten Basis (11) und der zweiten Basis (21) aus der vorgegebenen Vielzahl durch restringierte nichtlineare Optimierung vorgegeben werden.

6. Verfahren nach Anspruch 5,
wobei ein zweiter Arbeitsraum des zweiten Robotermanipulators (20) ermittelt wird, wobei der zweite Arbeitsraum eine endliche Vielzahl von Tupeln aus möglichen Positionen des zweiten Endeffektors (22) und möglichen Orientierungen des zweiten Endeffektors (22) an den jeweiligen Positionen des zweiten Endeffektors (22) angibt, und
wobei eine Restriktion der nichtlinearen Optimierung auf Basis einer Schnittmenge aus dem ersten Arbeitsraum des ersten Robotermanipulators (10) und des zweiten Arbeitsraums des zweiten Robotermanipulators (20) ermittelt wird.

7. Verfahren nach einem der vorhergehenden Ansprüche, wobei die vordefinierte Orientierung des zweiten Endeffektors (22) relativ zum ersten Endeffektor (12) durch eine halbe Drehung um einen Referenzpunkt des ersten Endeffektors (12) definiert ist, sodass der erste Endeffektor (12) und der zweite Endeffektor (22) symmetrisch aufeinander zeigen.

## Claims

1. Method for specifying a relative position between a first base (11) of a first robot manipulator (10) and a second base (21) of a second robot manipulator (20),
wherein a first workspace of the first robot manipulator (10) is determined (H1),
wherein the first workspace specifies a finite plurality of tuples of possible positions of the first end effector (12) and possible orientations of the first end effector (12) at the respective positions of the first end effector (12), wherein, for each of a predetermined plurality of possible relative positions between the first base (11) and the second base (21), a number of those tuples from the first workspace is determined (H2) as an evaluation metric, for which a second end effector (22) of the second robot manipulator (20) is positionable in a predefined orientation and/or at a predefined distance in each case relative to the first end effector (12), and
wherein that relative position between the first base (11) and the second base (21) with the highest evaluation metric is determined and output (H3), wherein the first robot manipulator (10) is aligned in a fixed position relative to the second robot manipulator (20) according to the determined and output relative position between the first base (11) and the second base (21).

2. Method according to claim 1,
wherein the simulation method serves for specifying a relative position and a relative orientation between the first base (11) of the first robot manipulator (10) and the second base (21) of the second robot manipulator (20),
wherein, for each of a predetermined plurality of possible relative positions and possible relative orientations between the first base (11) and the second base (21), the evaluation metric is determined,
wherein that relative position and relative orientation between the first base (11) and the second base (21) with the highest evaluation metric is determined and output.

3. Method according to any one of the preceding claims, wherein, when determining the evaluation metric, it is checked whether a collision occurs between the first robot manipulator (10) and the second robot manipulator (20).

4. Method according to any one of claims 1 to 3,
wherein the possible relative orientations and/or possible relative positions between the first base (11) and the second base (21) from the predetermined plurality are specified in a grid.

5. Method according to any one of claims 1 to 3,
wherein the possible relative orientations and/or possible relative positions between the first base (11) and the second base (21) from the predetermined plurality are specified by constrained nonlinear optimization.

6. Method according to claim 5,
wherein a second workspace of the second robot manipulator (20) is determined, wherein the second workspace specifies a finite plurality of tuples of possible positions of the second end effector (22) and possible orientations of the second end effector (22) at the respective positions of the second end effector (22), and
wherein a constraint of the nonlinear optimization is determined on the basis of an intersection of the first workspace of the first robot manipulator (10) and the second workspace of the second robot manipulator (20).

7. Method according to any one of the preceding claims,
wherein the predefined orientation of the second end effector (22) relative to the first end effector (12) is defined by a half rotation about a reference point of the first end effector (12), so that the first end effector (12) and the second end effector (22) point towards each other in a symmetric manner.

## Revendications

1. Méthode pour spécifier une position relative entre une première base (11) d'un premier manipulateur de robot (10) et une deuxième base (21) d'un deuxième manipulateur de robot (20),
où un premier espace de travail du premier manipulateur de robot (10) est déterminé (H1), où le premier espace de travail indique une pluralité finie de tuples de positions possibles du premier effecteur terminal (12) et d'orientations possibles du premier effecteur terminal (12) aux positions respectives du premier effecteur terminal (12), où, pour chacune d'une pluralité prédéfinie de positions relatives possibles entre la première base (11) et la deuxième base (21), un nombre de ces tuples du premier espace de travail est déterminé (H2) en tant que grandeur d'évaluation, pour lesquels un deuxième effecteur terminal (22) du deuxième manipulateur de robot (20) est une orientation prédéfinie et/ou à une distance prédéfinie respectivement par rapport au premier effecteur terminal (12) positionnable, et
où la position relative entre la première base (11) et la deuxième base (21) ayant la grandeur d'évaluation la plus élevée est déterminée et émise (H3), où le premier manipulateur de robot (10) par rapport au deuxième
manipulateur de robot (20) conformément à la position relative déterminée et émise entre la première base (11) et la deuxième base (21) est aligné de manière stationnaire.

2. Méthode selon la revendication 1,
où la méthode de simulation sert à spécifier une position relative et une orientation relative entre la première base (11) du premier manipulateur de robot (10) et la deuxième base (21) du deuxième manipulateur de robot (20),
où, pour chacune d'une pluralité prédéfinie de positions relatives possibles et d'orientations relatives possibles entre la première base (11) et la deuxième base (21), la grandeur d'évaluation est déterminée,
où la position relative et l'orientation relative entre la première base (11) et la deuxième base (21) ayant la grandeur d'évaluation la plus élevée est déterminée et émise.

3. Méthode selon l'une des revendications précédentes, où lors de la détermination de la grandeur d'évaluation il est vérifié si une collision entre
le premier manipulateur de robot (10) et le deuxième manipulateur de robot (20) se produit.

4. Méthode selon l'une des revendications 1 à 3,
où les orientations relatives possibles et/ou les positions relatives possibles entre la première base (11) et la deuxième base (21) de la pluralité prédéfinie sont prédéfinies dans une grille.

5. Méthode selon l'une des revendications 1 à 3,
où les orientations relatives possibles et/ou les positions relatives possibles entre la première base (11) et la deuxième base (21) de la pluralité prédéfinie sont prédéfinies par une optimisation non linéaire à contraintes.

6. Méthode selon la revendication 5,
où un deuxième espace de travail du deuxième manipulateur de robot (20) est déterminé, où le deuxième espace de travail indique une pluralité finie de tuples de positions possibles du deuxième effecteur terminal (22) et d'orientations possibles du deuxième effecteur terminal (22) aux positions respectives du deuxième effecteur terminal
(22), et
où une contrainte de l'optimisation non linéaire est déterminée basée sur l'intersection du premier espace de travail du premier manipulateur de robot (10) et du deuxième espace de travail du deuxième manipulateur de robot (20).

7. Méthode selon l'une des revendications précédentes,
où l'orientation prédéfinie du deuxième effecteur terminal (22) par rapport au premier effecteur terminal (12) est définie par une demi-rotation autour d'un point de référence du premier effecteur terminal (12), de sorte que le premier effecteur terminal (12) et le deuxième effecteur terminal (22) se font face symétriquement.
